(19) Europäisches Patentamt
European Patent Office
Office européen des brevets

(11) **EP 2 369 372 A2**

(12) **EUROPEAN PATENT APPLICATION**

(43) Date of publication:
**28.09.2011 Bulletin 2011/39**

(51) Int Cl.:
***G02B 5/134*** (2006.01)

(21) Application number: **11158174.0**

(22) Date of filing: **15.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2010 JP 2010057455**

(71) Applicant: **Mitutoyo Corporation**
**Kawasaki-shi,**
**Kanagawa 213 (JP)**

(72) Inventor: **Tanimura, Yoshihisa**
**Ibaraki 305-0854 (JP)**

(74) Representative: **MERH-IP**
**Matias Erny Reichl Hoffmann**
**Paul-Heyse-Strasse 29**
**80336 München (DE)**

(54) **Laser reflector**

(57) A laser reflector 3 for converging a laser beam emitted from an irradiation unit 2 at a point by a lens 5 and a spherical body 4 and for reflecting the laser beam by a coating 12 on a surface of the spherical body 4 to be returned, parallel to an optical axis of the laser beam, to the irradiation unit 2. The center and the two focuses of the lens 5 and the center of the spherical body 4 are disposed on the optical axis P-axis. The laser beam con- verged by the lens 5 toward the focus is refracted by the spherical body 4, passes through the inside of the spherical body 4, and is converged at the intersection covered by the coating 12. When the orientation of the laser re- flector is changed, an incident laser beam is converged by the lens 5 and the spherical body 4 at a point on the surface of the spherical body 4 shifted from the intersec- tion.

**FIG.2**

EP 2 369 372 A2

**Description**

CROSS-REFERENCE TO RELATED APPLICATIONS

This application is based on and claims the benefits of priority from Japanese Patent Application No. 2010-57455, filed on March 15, 2010, the entire contents of which are incorporated herein by reference.

BACKGROUND OF THE INVENTION

1. Field of the Invention

The present invention relates to laser reflectors for reflecting a laser beam emitted from an irradiation unit, to the irradiation unit, and more particularly, to an improvement of laser reflectors used in laser-interferometer length measuring machines.

2. Description of the Related Art

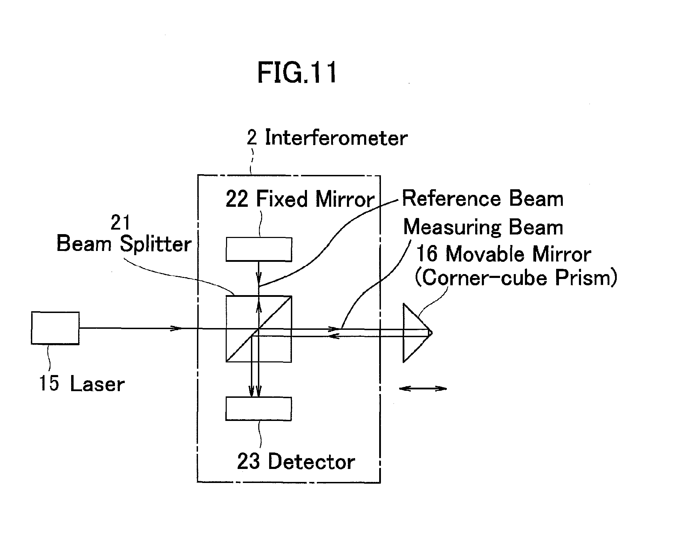

Known laser-interferometer length measuring machines include those that use the Michelson interferometer have been known (such as that disclosed in Japanese Unexamined Patent Application Publication No. Hei-2-115701), which can measure the dimensions of an object under measurement at high resolution without any contact. The length measuring machine disclosed in Japanese Unexamined Patent Application Publication No. Hei-2-115701 includes a laser 15, an interferometer 2, and a movable stage, not shown, on which an object under measurement is placed, as shown in Fig. 11. A laser beam emitted from the laser 15 is separated by a beam splitter 21 into a reference beam and a measuring beam; the measuring beam is reflected by a movable mirror (laser reflector) 16 mounted on the movable stage; the reference beam is reflected by a fixed mirror (fixed flat reflector) 22; the reflected measuring beam is combined with the reflected reference beam at the beam splitter 21; and generated interference fringes are detected by a detector 23. When the movable stage is moved in the optical axis direction of the measuring beam by a half of the wavelength ($\lambda$/2) of the laser beam, the optical path difference between the measuring beam and the reference beam is $\lambda$. The detector 23 detects sinusoidal optical intensity changes having a period of $\lambda$/2. In other words, since the interference fringes change as the movable stage is moved, the change in interference fringes is checked to count the total number of peaks in the optical intensity and to determine the distance moved by the movable stage. When the movable stage is moved by the length of the object under measurement, the length of the object under measurement can be measured on the order of nanometers.

When the length measuring machine is used to measure the length, a retroreflector has been used as the movable mirror 16, instead of a flat reflector, to accurately return the measuring beam reflected by the movable mirror 16 to the beam splitter 21. As the retroreflector, a right-angle triple mirror or a comer-cube prism can be used, for example.

When the distance moved by the movable mirror 16 mounted on the movable stage becomes longer, which means that the length of the object under measurement becomes longer, the orientation of the movable mirror 16 may change. This is because the movable stage may experience pitching, yawing, or rolling. When a retroreflector is used, instead of the movable mirror 16, even if the orientation of the movable stage changes, the reflection direction of the measuring beam is not changed, and the reflected beam is always returned in the direction parallel to the direction of the incident beam.

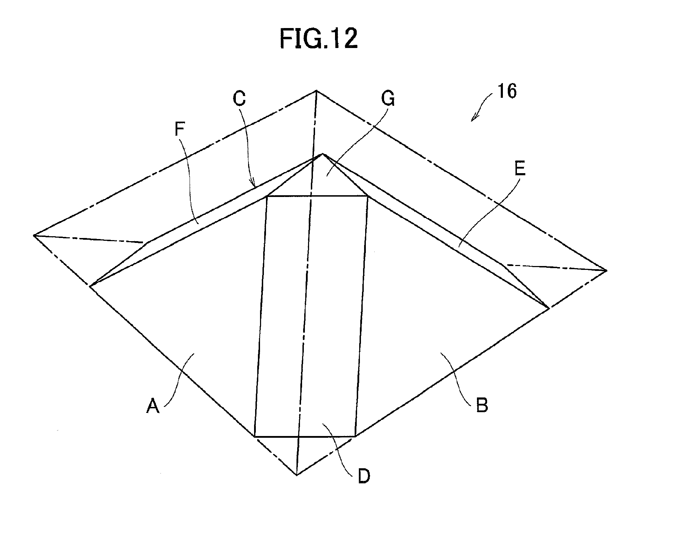

A right-angle triple mirror or a corner-cube prism, which has been used as a retroreflector, has three flat surfaces A to C perpendicular to each other, and also has three edges D to F, which are lines of intersection between the three flat surfaces, and a corner point G, which is the intersection of the three flat surfaces, as shown in Fig. 12. The edges D to F and the corner point G are truncated with finite dimensions as shown in the figure for the sake of machining and practical use of the right-angle triple mirror or the corner-cube prism. This means that the right-angle triple mirror or the corner-cube prism is made safe in handling and its machining is facilitated.

The reflected measuring beam has six separated portions in cross section and is returned to the interferometer 2 because of the three edges D to F of the movable mirror 16 and their virtual images. In addition, since the incident measuring beam is diffused by the three edges D to F and the corner point G, which are truncated, the intensity of the reflected beam is always reduced by 10% to 20% compared with the incident beam. These problems occur not only in laser-interferometer length measuring machines but also in precision measuring apparatuses and precision machining apparatuses that use lasers, where a laser reflector retro-reflects a laser beam emitted from an irradiation unit.

SUMMARY OF THE INVENTION

The present invention has been made in view of the above-described related art. An object of the present invention is to provide a laser reflector capable of always returning the reflected laser beam in the direction parallel to an incident laser beam even if the orientation of the laser reflector changes relative to an irradiation unit of the laser beam.

Another object of the present invention is to provide a laser reflector that does not cause six separated portions in the cross section of a reflected laser beam and that reduces the attenuation of the intensity of the reflected laser beam, unlike when a right-angle triple mirror or a comer-cube prism is used as a laser reflector.

One of the foregoing objects is achieved in one aspect of the present invention through the provision of a laser reflector that includes a lens and a spherical body provided on the optical axis (P-axis) of a laser beam emitted from an irradiation unit; a coating that covers a surface of the spherical body and reflects the laser beam; and a supporting member that keeps the positional relationship between the lens and the spherical body. The laser beam emitted from the irradiation unit is converged at a point by the lens and the spherical body and is reflected by the coating to be returned, parallel to the optical axis (P-axis), to the irradiation unit. The center and the two focuses of the lens are disposed on the optical axis (P-axis). The center of the spherical body is disposed such that the center of the spherical body is on a line connecting the center of the lens and a focus ($F_1$) of the two focuses of the lens farther from the irradiation unit and such that the focus ($F_1$) of the lens is outside the spherical body. The coating covers at least an area that includes the intersection ($Q_1$) of the optical axis (P-axis) and a half spherical surface of the spherical body closer to the focus ($F_1$) of the lens, on the half spherical surface. The distance ($S_1$) between the center of the lens and the center of the spherical body and the refractive index (n1) of the spherical body are specified such that the laser beam converged by the lens toward the focus ($F_1$) is refracted by the spherical body, passes through the inside of the spherical body, and is converged at the intersection ($Q_1$) covered by the coating. The laser beam converged at the intersection ($Q_1$) is reflected by the coating to be returned to the irradiation unit as a beam parallel to the optical axis (P-axis). When the orientation of the supporting member is changed, causing a line connecting the centers of the lens and the spherical body to be tilted relative to the optical axis (P-axis), an incident laser beam is converged by the lens and the spherical body at a point on a surface of the spherical body shifted from the intersection ($Q_1$), and is reflected by the coating to be returned to the irradiation unit as a reflected beam parallel to the optical axis (P-axis).

When the laser reflector of the present invention is used for a laser-interferometer length measuring machine, the irradiation unit corresponds to the interferometer (beam splitter) that makes a measuring beam incident on the laser reflector. The laser reflector is mounted on a movable stage provided for the length measuring machine so as to be movable in the moving direction of the movable stage.

One of the foregoing objects is achieved in another aspect of the present invention through the provision of a laser reflector that includes a lens and a spherical body provided on the optical axis (P-axis) of a laser beam emitted from an irradiation unit; a coating that covers a surface of the spherical body and reflects the laser beam; and a supporting member that keeps the positional relationship between the lens and the spherical body. The laser beam emitted from the irradiation unit is converged at a point inside the spherical body by the lens and is reflected by the coating to be returned, parallel to the optical axis (P-axis), to the irradiation unit. The center and the two focuses of the lens are disposed on the optical axis (P-axis). The center of the spherical body matches a focus ($F_2$) of the two focuses of the lens farther from the irradiation unit. The coating covers at least an area around the intersection ($A_2$) of the optical axis (P-axis) and a half spherical surface of the spherical body away from the lens, the area having almost the same area as an area where the laser beam emitted from the irradiation unit irradiates the spherical body, on the half spherical surface. The laser beam converged at the focus ($F_2$) inside the spherical body by the lens is reflected by the coating when the laser beam expands to a given area from the focus ($F_2$), to be returned to the irradiation unit as a reflected beam parallel to the optical axis (P-axis). When the orientation of the supporting member is changed, causing a line connecting the centers of the lens and the spherical body to be tilted relative to the optical axis (P-axis), an incident laser beam is converged by the lens and the spherical body at a point ($Q_2$') on a focal plane shifted from the focus ($F_2$), and is reflected by the coating when the laser beam expands to a given area, to be returned to the irradiation unit as a reflected beam parallel to the optical axis (P-axis).

One of the foregoing objects is achieved in still another aspect of the present invention through the provision of a laser reflector that includes a spherical body provided on the optical axis (P-axis) of a laser beam emitted from an irradiation unit; a coating that covers a surface of the spherical body and reflects the laser beam; and a supporting member that holds the spherical body. The laser beam emitted from the irradiation unit is converged by the spherical body at a point and is reflected by the coating to be returned, parallel to the optical axis (P-axis), to the irradiation unit. The center of the spherical body is disposed on the optical axis (P-axis). The coating covers at least an area that includes the intersection ($Q_3$) of the optical axis (P-axis) and a half spherical surface of the spherical body away from the irradiation unit, on the half spherical surface. The refractive index (n3) of the spherical body is set to 2. A laser beam incident on the spherical body is refracted due to the refractive index n3 of 2, to be converged at the intersection ($Q_3$) covered by the coating after advancing inside the spherical body, and is reflected by the coating to be returned to the irradiation unit as a reflected beam parallel to the optical axis (P-axis).

It is preferred that the supporting member have a circular window that restricts the diameter of the laser beam emitted from the irradiation unit. The supporting member may be configured such that it can be mounted on a movable stage that can move in a direction almost parallel to the optical axis (P-axis); it has mounting holes at positions corresponding to the center of the spherical body, the point where the laser beam is converged, and the position of the coating; and it has indicators for indicating the center of the spherical body, the point where the laser beam is converged, and the position of the coating. It is preferred that the coating include a silver reflective film and a protective film that covers the silver reflective film.

According to the structure of a laser reflector of the present invention, when the line connecting the centers of the lens and the spherical body is kept parallel to the P-axis of an incident laser beam, the incident laser beam is always converged at the intersection $(Q_1)$ of the spherical body and the P-axis. Then, the reflected beam reflected by the coating at the intersection $(Q_1)$ passes through an optical path symmetrical to that of the incident laser beam with respect to the line connecting the center of the spherical body and the focus $(F_1)$ and emerges from the lens. Therefore, the reflected beam from the laser reflector is parallel to the P-axis.

If the orientation of the supporting member holding the lens and the spherical body changes to make the line connecting the centers of the lens and the spherical body not parallel to the P-axis of an incident laser beam, thus having a tilt angle $\Delta\theta$, the incident beam is converged by the lens at an off-axis focus $(F_1a)$. In such a case, the incident beam refracted by the spherical body is converged at the point $(Q_1a)$ on the spherical body surface which is shifted from the intersection $(Q_1)$. Then, the reflected beam reflected by the coating at the point $(Q_1a)$ passes through an optical path symmetrical to that of the incident beam with respect to the line connecting the center of the spherical body and the off-axis focus $(F_1a)$ and emerges from the lens. Therefore, the reflected beam from the laser reflector is made parallel to the P-axis. In the above description, it is explained that the reflected beam is parallel to the P-axis. If the tilt angle $\Delta\theta$ of the laser reflector is large, a part of the reflected beam from the spherical body may not be returned, reducing the intensity of the reflected beam. Therefore, it is preferred that the laser reflector be used in a range of tilt angles $\Delta\theta$ where the intensity reduction does not occur. When the laser reflector is used for a laser interferometer, since just an interference signal having a sufficient S/N ratio needs to be detected, a slight intensity reduction can be ignored.

As described above, even if the orientation of the laser reflector changes relative to the laser beam irradiation unit, the reflected beam can always be returned in the direction parallel to the P-axis of an incident beam, allowing so-called retroreflection. The laser reflector does not have edges which a right-angle triple mirror or a comer-cube prism has. Therefore, the laser beam is not separated into six portions by three edges, thus not causing six divisions in the cross section of the reflected beam. In addition, the laser reflector does not have a corner point which a right-angle triple mirror or a comer-cube prism has. Therefore, the intensity of the reflected beam is not reduced by a corner point.

According to the structure of a laser reflector of the present invention, because an incident laser beam is converged at a point inside the spherical body, the influence of partial scratches or the like on the spherical body surface on measurement can be reduced.

Since the supporting member has a circular window for restricting the diameter of a laser beam emitted from the irradiation unit, the diameter of the laser beam is restricted when the laser beam passes through the circular window, reducing the spherical aberration in the reflected beam.

In addition, since the supporting member has the mounting holes and the indicators for indicating the positions of the center of the spherical body, the beam converging point, and the coating, the laser reflector can be easily mounted to the movable stage while the positions of the spherical body and the beam converging point are being checked.

Since the coating is formed of the silver reflective film and the protective film therefor, the beam intensity is almost not reduced by reflection, and scratches or the like caused by careless handling can be prevented.

When a spherical body having a refractive index n3 of 2 is used to make a laser reflector, instead of a combination of a lens and a spherical body used in other aspects of the present invention, the lens is unnecessary. Therefore, the number of components constituting the laser reflector is reduced. In addition, fine adjustment of the distance between the spherical body and the lens is not required, thus allowing simple assembly.

BRIEF DESCRIPTION OF THE DRAWINGS

Fig. 1 is an outlined structural view of a laser-interferometer length measuring machine according to a first embodiment of the present invention.

Fig. 2 is a cross-sectional view of a laser reflector according to the first embodiment.

Fig. 3 is a view showing the relationship between an incident beam and a reflected beam obtained when the laser reflector is tilted by a tilt angle $\Delta\theta_Y$, and also showing the optical path of an upper part of the incident beam.

Fig. 4 is a view showing the optical path of a center part of the incident beam in Fig. 3.

Fig. 5 is a view showing the optical path of a lower part of the incident beam in Fig. 3.

Fig. 6 is a cross-sectional view of a laser reflector according to a second embodiment.

Fig. 7A shows a state in which the laser reflector is not tilted, and Fig. 7B shows a state in which the laser reflector is tilted by a tilt angle $\Delta\theta_Y$.

Fig. 8 is a view showing the relationship between an incident beam and a reflected beam obtained when the laser reflector is tilted.

Fig. 9 is a cross-sectional view of a laser reflector according to a third embodiment.

Fig. 10 shows an example of the present invention.

Fig. 11 is an outlined structural view of a conventional laser-interferometer length measuring machine.

Fig. 12 is an enlarged perspective view of a corner point of a conventional comer-cube prism.

DESCRIPTION OF THE PREFERRED EMBODIMENTS

First embodiment

Structure of laser-interferometer length measuring machine

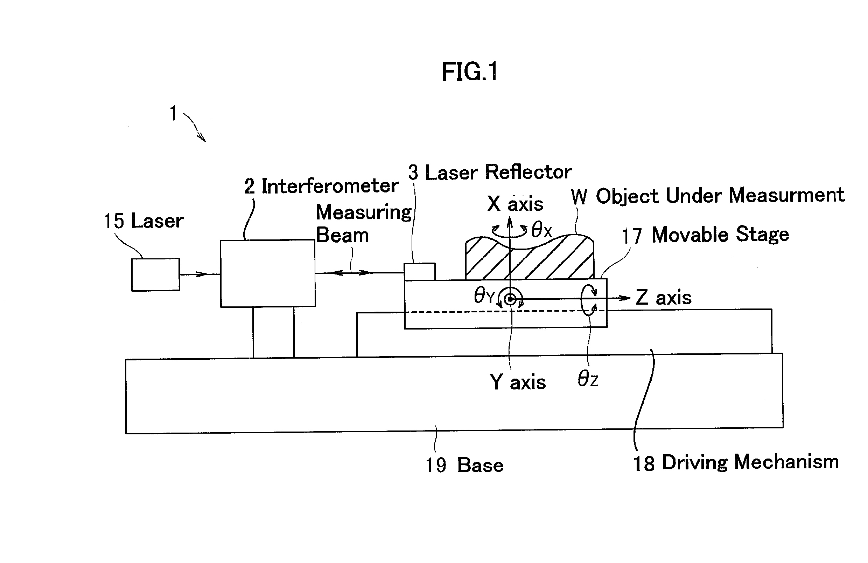

Fig. 1 is an outlined structural view of a laser-interferometer length measuring machine 1 according to a first embodiment of the present invention.

The length measuring machine 1 includes a base 19, a laser 15, an interferometer 2, a movable stage 17 on which an object under measurement W is placed, a driving mechanism 18 for the movable stage 17, and a laser reflector 3 mounted on the movable stage 17. The interferometer 2 serves as an irradiation unit of the present invention.

The laser 15 is provided separately from the interferometer 2 and supplies a laser beam having a predetermined wavelength $\lambda$ to the interferometer 2.

The interferometer 2 is secured to the base 19 and serves as an interferometer used for length measurement, having a beam splitter, a fixed mirror, a detector, and other optical devices, in the same way as a conventional interferometer described with reference to Fig. 11. The interferometer 2 emits a measuring beam, split by the beam splitter, toward the laser reflector 3 parallel to the Z axis shown in the figure. The optical axis of this measuring beam is called a P-axis. The detector detects the optical intensity of interference fringes generated when the measuring beam reflected by the laser reflector 3 and a reference beam reflected by the fixed mirror are combined.

The movable stage 17 is provided so as to be movable horizontally (along the Z axis in the figure) by the driving mechanism 18 provided on the base 19.

The laser reflector 3 is mounted at an end of the movable stage 17 and is moved along the Z axis as the movable stage 17 moves. The laser reflector 3 reflects the measuring beam emitted from the interferometer 2, towards the interferometer 2.

To measure the length of the object under measurement W along the Z axis with the length measuring machine 1, the movable stage 17 is moved by a distance corresponding to the length to be measured. Since detected interference fringes change, the change in interference fringes is checked to count the total number of peaks in the optical intensity. With this, the distance moved by the movable stage 17, that is, the length of the object under measurement W on the movable stage 17, is measured.

As one important performance metric, the laser reflector 3 is required to have retroreflective ability, reflecting the measuring beam emitted from the interferometer 2 as a reflected beam parallel to the measuring beam towards the interferometer 2.

When the movable stage 17 continuously moves on a rail provided for the driving mechanism 18, for example, the longer the movement distance is, the more the orientation of the movable stage 17 changes. This orientation change can usually be described as pitching, yawing, and rolling of the movable stage 17, as shown in Fig. 1. In Fig. 1, when it is assumed that another horizontal axis perpendicular to the Z axis, which is horizontal, is called the Y axis, and a vertical axis is called the X axis, pitching is turning (vertical turning) of the movable stage 17 around the Y axis, and its deflection is indicated by a tilt angle $\theta_Y$; yawing is turning around the X axis, and its deflection is indicated by a tilt angle $\theta_X$; and rolling is turning (horizontal turning) around the Z axis, and its deflection is indicated by a tilt angle $\theta_Z$.

Structure of laser reflector

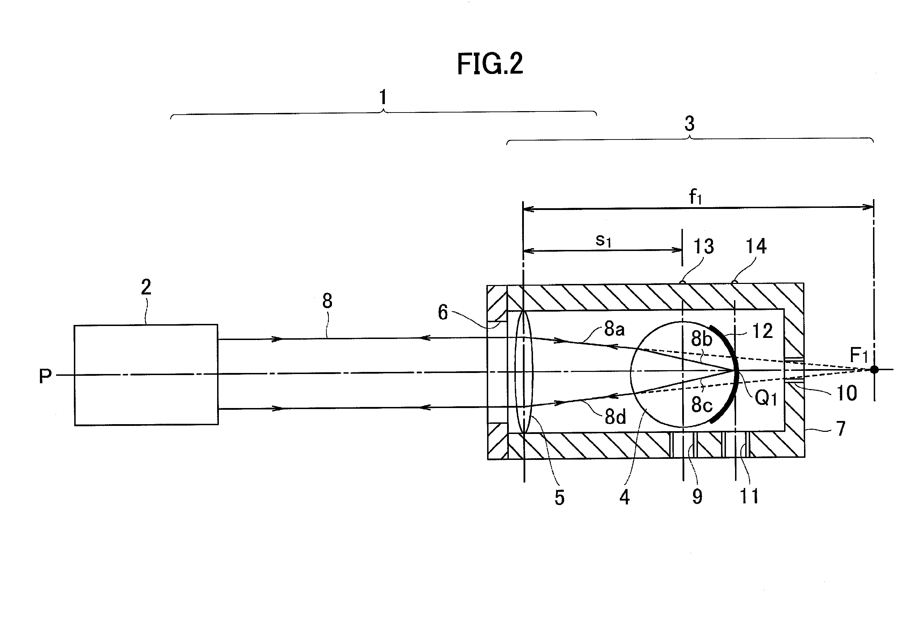

The laser reflector 3 includes a lens 5 having a focal length $f_1$, a spherical body 4 made of a material having a refractive index n1, and a casing 7 which accommodates the lens 5 and the spherical body 4, as shown in Fig. 2. In the present invention, the refractive indexes of optical members, such as the spherical body 4, are the ratios relative to the refractive index of air (having a refractive index of 1).

A beam window (opening) 6 is formed on a line extended from a line passing through the center of the spherical body 4 and the center of the lens 5, so that a laser beam 8 coming from the outside of the casing 7 is incident on the lens 5 through the window 6. The window 6 has a circular shape. Therefore, when the laser beam 8 passes through the window 6, the diameter of the laser beam 8 is restricted to reduce the spherical aberration in the reflected beam. When it is assumed that the line connecting the center of the lens 5 and that of the spherical body 4 is the center line of the accommodation space in the casing 7, the lens 5 is held by the casing 7 such that both focuses of the lens 5 are disposed on this center line. As shown in Fig. 2, the positions of both focuses of the lens 5 may be outside the casing 7.

The center of the spherical body 4 is disposed on the line connecting the center of the lens 5 and the focus $F_1$ of the lens 5 that is away from the window 6. The spherical body 4 has a size which does not include the focus $F_1$ of the lens 5. The positional relationship between the lens 5 and the spherical body 4 is determined by the casing 7. The casing 7 serves as a supporting member of the present invention.

The spherical body 4 has a coating 12 which covers a part of its surface and reflects the laser beam 8.

The coating 12 covers an area which includes the intersection $Q_1$ of the center line of the accommodation space and a half of the spherical surface of the spherical body 4 that is closer to the focus $F_1$ of the lens 5, on the half of the spherical surface.

When one spherical body 4 is chose from spherical bodies of different refractive index for the laser reflector 3, the laser reflector 3 can be made by appropriately specifying the distance $S_1$ between the centers of the lens 5 and the spherical body 4. More specifically, the distance $S_1$ between the centers needs to be specified such that a laser beam 8a to be converged by the lens 5 at the focus $F_1$ is refracted by the spherical body 4 to be converged at the intersection $Q_1$ covered by the coating 12.

On the contrary, when the distance $S_1$ between the centers of the lens 5 and the spherical body 4 is determined in advance due to the restriction on the size of the casing 7 or the like, the refractive index n1 of the spherical body 4 needs to be selected accordingly. By doing so, the laser beam 8a incident on the spherical body 4 is converged at the intersection $Q_1$. The laser beam 8a passing through the inside of the spherical body 4 and converged at the intersection $Q_1$ is reflected by the coating 12, which covers the intersection $Q_1$.

The coating 12 is formed of a silver reflective film which covers the area around the intersection $Q_1$, which is a beam converging point, on the spherical surface of the spherical body 4 and a protective film which covers the reflecting film. The use of the silver thin film as a reflective film almost entirely eliminates a reduction in optical intensity caused by reflection at the beam converging point. The protective film can be easily made by coating the outside surface of the reflective film. Covering the reflective film with the protecting film prevents scratches and other damage caused by careless handling.

Optical path of laser beam reflected by laser reflector

How the laser reflector 3 is mounted on the movable stage 17 (see Fig. 1) and reflects the laser beam 8 emitted from the interferometer 2 will be described below in detail with reference to Fig. 2.

The laser reflector 3 is mounted on the movable stage 17 such that the center line of the accommodation space is aligned with the optical axis (P-axis) of the laser beam 8. As shown in Fig. 2, when the P-axis of the laser beam 8 emitted from the interferometer 2 is kept parallel to the center line of the laser reflector 3, the laser beam 8 is incident on the lens 5 through the window 6 and is refracted there to advance toward the focus $F_1$ (see laser beam 8a in the figure). The laser beam 8a is refracted at the surface of the spherical body 4 with the refractive index n1, passes through the inside of the spherical body 4, and is converged at the intersection $Q_1$ (see laser beam 8b). Since the intersection $Q_1$ is on the center line of the lens 5 and the spherical body 4, the reflected beam reflected by the coating 12 passes through the optical paths of laser beams 8c and 8d to be incident on the lens 5 again. The optical paths of the laser beams 8c and 8d are symmetrical to the optical paths of the laser beams 8a and 8b with respect to the center line of the laser reflector 3. The laser beam 8d is made parallel to the P-axis by the lens 5 and is returned to the interferometer 2.

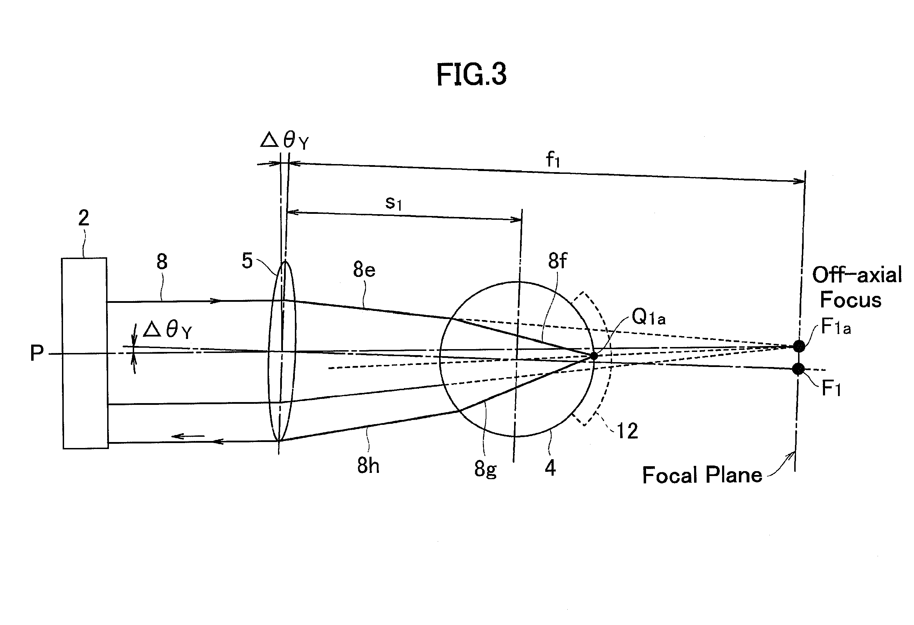

A case in which the beam converging point is shifted from the intersection $Q_1$ due to a change in the orientation of the movable stage 17 will be described next. As an example, a case in which the movable stage 17, shown in Fig. 1, is turned around the Y axis will be described in detail with reference to Figs. 3 to 5. In Figs. 3 to 5, the laser reflector 3 is tilted relative to the P-axis of the laser beam 8 due to a vertical turn at an angle of $\Delta\theta_Y$.

Fig. 3 shows the optical path of an upper part of the laser beam 8.

The laser beam 8 emitted from the interferometer 2 is refracted by the lens 5 and advances toward an off-axis focus $F_1a$ (see laser beam 8e in the figure). The off-axis focus $F_1a$ is on the focal plane that includes the focus $F_1$. The laser beam 8e is refracted at the surface of the spherical body 4 with the refractive index n1, becoming a laser beam 8f, passes through the inside of the spherical body 4, and is converged at a point $Q_1a$. The point $Q_1a$ is shifted from the intersection $Q_1$ but is on the spherical surface covered with the coating 12. The reflected beam reflected by the coating 12 at the point $Q_1a$ passes through the optical paths of laser beams 8g and 8h and is incident on the lens 5 again. The optical paths of the laser beams 8g and 8h are symmetrical to the optical paths of the laser beams 8e and 8f with respect to the line connecting the center of the spherical body 4 and the off-axis focus $F_1a$. The laser beam 8h is made parallel to the P-axis by the lens 5 and is returned to the interferometer 2.

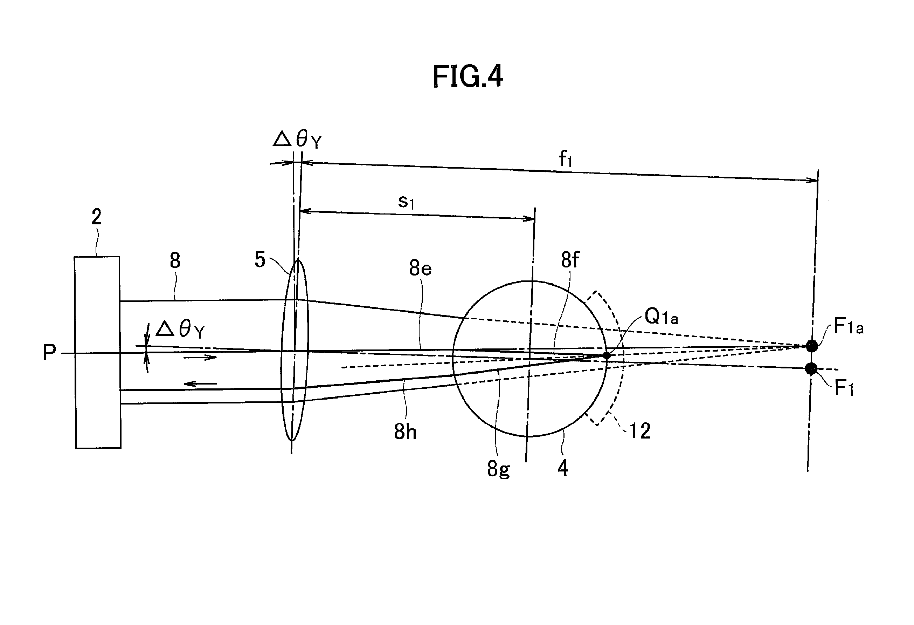

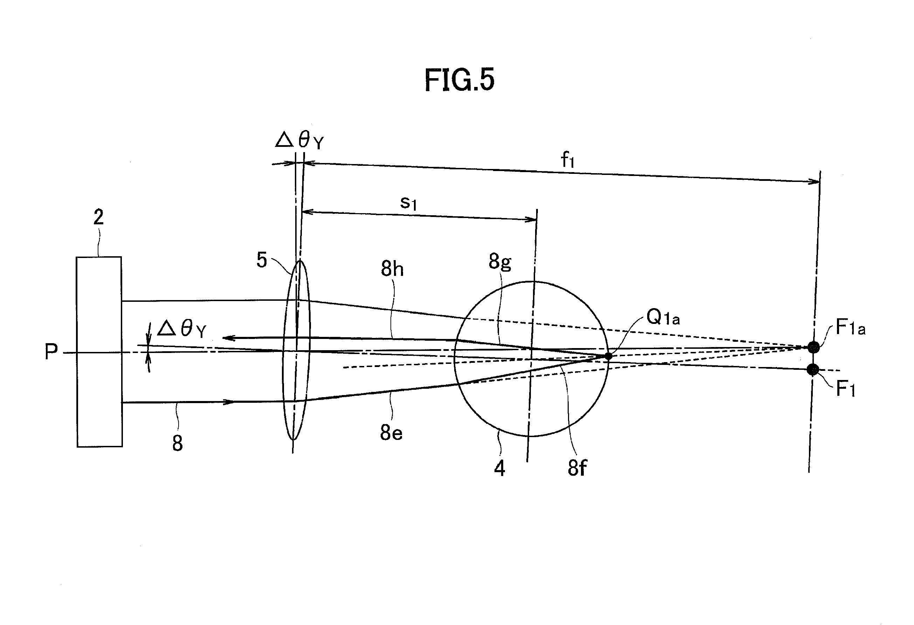

Figs. 4 and 5 show the optical paths of a center part and a lower part of the laser beam 8. In the same way as in Fig. 3, the laser beam 8 is refracted by the lens 5 and advances toward the off-axis focus $F_1a$, is then refracted at the surface of the spherical body 4, and is converged at the point $Q_1a$. The reflected beam reflected by the coating 12 is refracted at the surface of the spherical body 4 and the lens 5 to be made parallel to the P-axis and returned to the interferometer 2.

As described above, which positions on the lens (objective lens) 5 the upper part, the center part, and the lower part of the incident light are returned to when the laser reflector 3 is tilted by the tilt angle $\Delta\theta_Y$ are shown in Figs. 3 to 5. In Fig. 3, the laser beam incident at the upper end is reflected and returned to the lens 5 at the lower end; in Fig. 4, the laser beam incident at the center is reflected and returned to the lens 5 below the optical axis (P-axis); and in Fig. 5, the laser beam incident at the lower end is reflected and returned to the lens 5 above the optical axis (P-axis).

When the laser reflector 3 is tilted around the center of the lens 5 at the tilt angle $\Delta\theta_Y$, the lens 5 is tilted, and the center of the spherical body 4 is shifted from the P-axis. In Fig. 3, for example, the spherical body 4 is moved lower relative to the lens 5. In that case, the beam converging point is the point $Q_1a$, which is above the point $Q_1$ shown in Fig. 2, but is almost at the same position as that before tilting since the tilt angle ($\Delta\theta_Y$) is small. Therefore, the reflected beam is not much off the center of the lens 5, and therefore does not cause a reduced optical intensity, unlike the case shown in Fig. 3. If the tilt angle is large, part of the reflected beam is not returned to the lens 5, and the intensity of the reflected beam is reduced. Even in such a case, the returned light of all of the incident light practically needs to be detected as an interference signal having a sufficient S/N ratio at the interferometer 2. Therefore, a slight decrease in intensity can be ignored.

In Fig. 3, the shifted beam converging point $Q_1a$ is located on the surface of the spherical body 4. More correctly, when it is assumed that the laser beam is converged at the ideal focus ($F_1$ or $F_1a$) with the minimum beam converging area, if the laser reflector 3 is tilted, the point $Q_1a$ is not located on the surface of the spherical body 4. Strictly speaking, however, the laser beam is not converged at one point, and the lens has a given depth of focus. Therefore, even if the laser reflector 3 is tilted, so long as the tilt angle $\Delta\theta_Y$ is so small that it does not cause the point $Q_1a$ to shift from the surface of the spherical body 4 due to the depth of focus, it can be said that the point $Q_1a$ is located on the surface of the spherical body 4.

Since the laser reflector 3 is configured such that a laser beam is narrowed at one point by the lens 5 and the spherical body 4, it can return the reflected beam to the interferometer 2 parallel to the P-axis of an incident beam irrespective of a change in the orientation of the movable stage 17. The laser reflector 3 works like a three-dimensional cat's eye, serving as a retroreflector.

An important parameter for this function is the distance $S_1$ between the spherical body 4 and the lens 5. The distance $S_1$ is determined by the relationships among the refractive index n1 of the spherical body 4, the focal length $f_1$ of the lens, and the wavelength of the laser beam used. In practice, the distance $S_1$ is finely adjusted such that the reflected beam is made parallel to the P-axis and then determined.

It is preferred to machine, in advance, a tapped hole 9 used to mount the laser reflector 3 to the movable stage 17, at a position on a plane passing through the center of the spherical body 4 and perpendicular to the center line of the laser reflector 3 in the casing 7, as shown in Fig. 2. It is also preferred that a mark 13 which indicates the position of the center of the spherical body 4 be made at a position on the same plane. In the same way, it is preferred that a tapped hole 11 and a mark 14 be made at positions corresponding to the beam converging point $Q_1$ on the spherical body 4 in the casing 7. These marks 13 and 14 serve as indicators of the present invention. It is further preferred that a tapped hole 10 be made on the center line of the laser reflector 3 in the casing 7. With the positions of the tapped holes 9 to 11 and the marks 13 and 14 provided in advance in the casing 7, the correct position of the center of turning (pitching or yawing) of the laser reflector 3 and the position of the reflection point (beam converging point $Q_1$) can be easily ascertained in length measurement using laser interference.

The coating 12 covers a sufficient area. The sufficient area means an area which can reflect a laser beam even if the beam converging point $Q_1$ is shifted due to turning of the movable stage 17, as described above.

The structure of the present embodiment prevents a laser beam from being separated into six portions by three edges, and thus does not cause six divisions in the cross section of the reflected beam, unlike a right-angle triple mirror or a comer-cube prism, and also prevents the intensity of the reflected beam from always decreasing by 10% to 20% compared with the incident beam.

The spherical body 4, which is a component of the laser reflector 3, is easily obtained. More specifically, the spherical body 4 just needs to be made of a material having the refractive index n1, which can be any value, and therefore, an inexpensive general optical glass product can be used therefor. Since a laser beam is converged at a point on the spherical surface of the spherical body 4 at the side opposite the incident side, uniform reflected beam can be obtained when the spherical body 4 is made so as to have no scratches at least at an area that includes that beam converging point. Even if the spherical body 4 does not have highly precise sphericity, it can still achieve the function of a three-dimensional cat's eye in combination with the lens 5.

Second embodiment

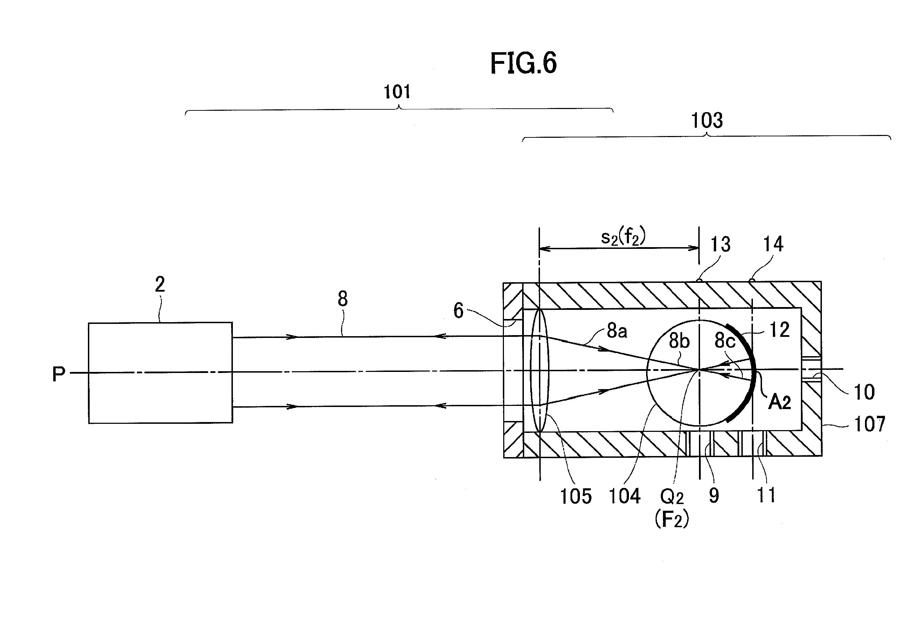

Fig. 6 is a cross-sectional view of a laser reflector according to a second embodiment of the present invention. A laser-interferometer length measuring machine 101 has almost the same structure as the length measuring machine 1, but the laser reflector has a different structure from that in the first embodiment. Components having similar functions to but different structures from those described above are assigned reference numbers to which 100 are added. The laser reflector 103 includes a lens 105 having a focal length $f_2$, a spherical body 104 having a refractive index n2, and a casing 107. The focal length $f_2$, or the distance $S_2$ between the centers of the lens 105 and the spherical body 104, is specified such that the distance $S_2$ is equal to the focal length $f_2$ of the lens 105. The spherical body 104 has a coating 12 that covers a part of its surface. The coating 12 covers an area around the intersection $A_2$ of an optical axis (P-axis) and a half of the spherical surface of the spherical body 104 that is away from the lens 105, on the half of the spherical surface. The coating 12 covers at least almost the same area as an area irradiated with a incident laser beam when the laser reflector 103 is not tilted.

When a laser beam 8 is emitted to the lens 105 through a window 6, the laser beam 8 is converged by the lens 105 at a focus $F_2$ (see laser beam 8a). Since the focus $F_2$ matches the center of the spherical body 104, the laser beam 8a is not refracted but advances in a straight line into the inside of the spherical body 104 and is converged at a beam converging point $Q_2$ (focus $F_2$) as a laser beam 8b. Passing through the beam converging point $Q_2$, the laser beam spreads to a given area and is reflected by the coating 12 as a laser beam 8c. The laser beam 8c spreads to the given area to cover the same area as the area where the spherical body 104 is irradiated with the laser beam 8a. The laser beam 8c reflected by the coating 12 is converged at the center of the spherical body 104 and is incident on the lens 105 via the optical paths of the laser beams 8a and 8b. The laser beam is made parallel to the optical axis (P-axis) of the incident beam by the lens 105 and is returned to an interferometer 2.

To implement the reflective optical system of the present embodiment, the spherical body 104 needs to be made of a material having the refractive index n2, which is larger than the refractive index n1 of the spherical body 4, described above, or the focal length $f_2$ needs to be shorter than the focal length $f_1$.

Even if the position of the beam converging point $Q_2$ is shifted from the center of the spherical body 104 because of a change in the orientation of a movable stage 17, the reflected beam is returned to the interferometer 2 as a laser beam parallel to the P-axis of the incident beam. The laser reflector 103 serves as a spherical cat's eye.

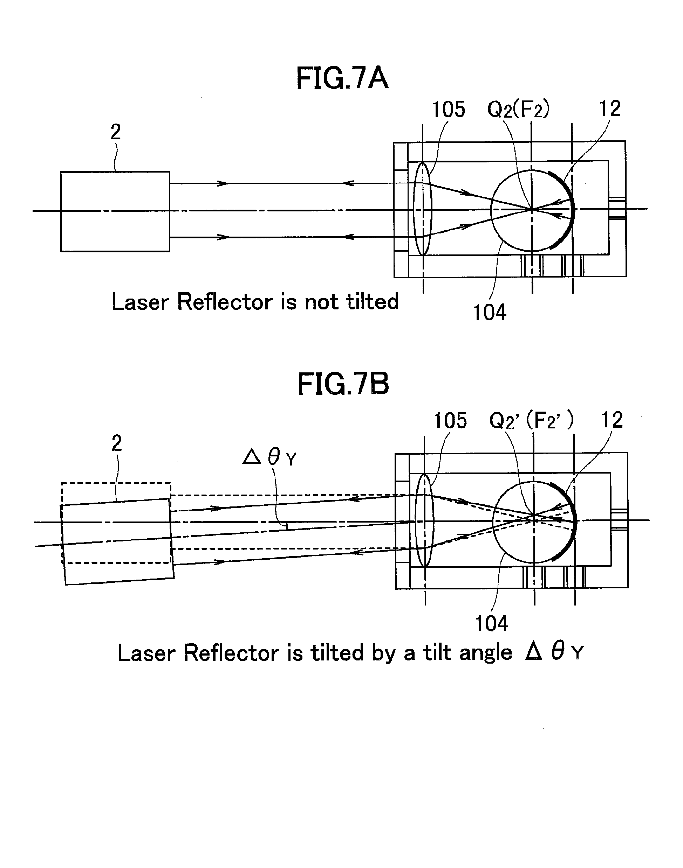

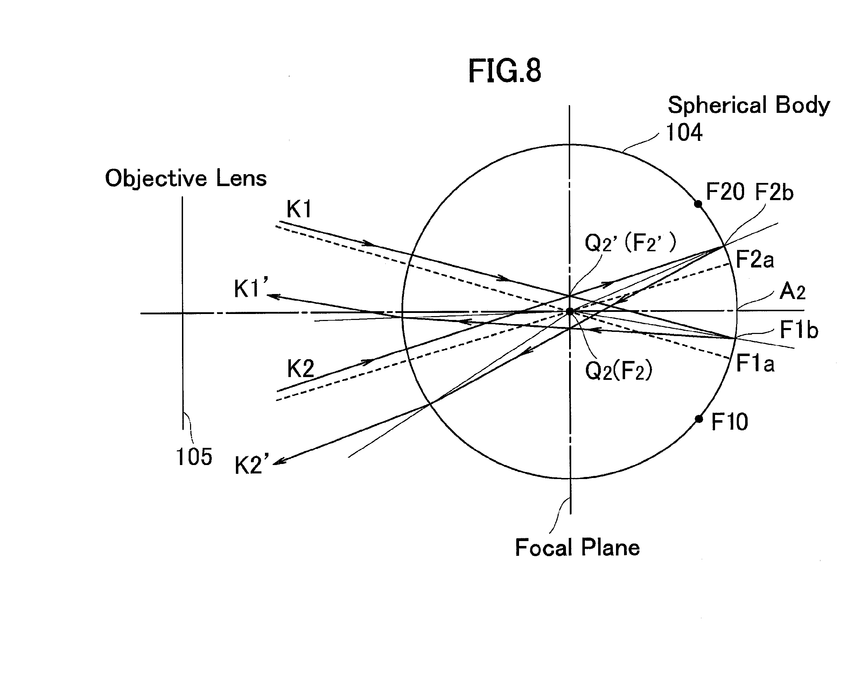

A case where the beam converging point $Q_2$ is shifted due to a change in the orientation of the movable stage 17 will be described with reference to Figs. 7A, 7B, and 8. In this case, the laser reflector 103 is not tilted, but a laser beam is incident on the lens 105 with its optical axis being tilted by a tilt angle $\Delta\theta_Y$. The incident laser beam is converged as laser beams K1 and K2. Inside the spherical body 104, the laser beams K1 and K2 behave in the following way. In Fig. 8, the coating 12 is formed in an area from a point $F_{10}$ to a point $F_{20}$ on the spherical surface.

The laser beam K1 passes through a beam converging point $Q_2'$ ($F_2'$) which is shifted from the center $Q_2$ (focus $F_2$) of the spherical body 104 on the focal plane because the incident laser beam is tilted. The laser beam K1 passed through the point $Q_2'$ is reflected at a point $F_1$b, which would be a point $F_1$a if the incident laser beam were not tilted, and is returned to the lens 105 as a laser beam K1'. The laser beam K2 passes the beam converging point $Q_2'$ ($F_2'$), is reflected at a point $F_2$b, which would be a point $F_2$a if the incident laser beam were not tilted, and is returned to the lens 105 as a laser beam K2'. If the incident laser beam is not tilted, it is focused at the center of the spherical body 104 and is reflected by the spherical surface area from the point $F_1$a to the point $F_2$a. When the incident laser beam is tilted as in this case, the laser beam from K1 to K2, having almost a conical shape, is reflected by the spherical surface area from the point $F_1$b to the point $F_2$b to form a reflected laser beam from K1' to K2'. A laser beam incident on the area from the point $F_2$a to the point $F_2$b is reflected by the coating 12, mostly diverges, and is not returned to the lens 105. A laser beam is not incident on the area from the point $F_1$a to the point $F_1$b.

Since a part of the incident laser beam is not reflected or a part of the reflected laser beam is not returned to the lens 105 in this embodiment, the reflected laser beam is attenuated in intensity. As in the first embodiment, as long as the tilt angle $\Delta\theta_Y$ is minute, however, the influence is small. In other words, the present embodiment can have an intensity attenuation proportional to the tilt angle of the movable stage 17, whereas the conventional comer-cube prism can generate a reflected laser beam having only an intensity attenuated from that of an incident laser beam by about 10% to 20% or more.

An important parameter for this function is the distance $S_2$ (focal length $f_2$) between the centers of the spherical body 104 and the lens 105. The distance $S_2$ is determined by the relationship between the focal length $f_2$ of the lens 105 and the wavelength of the laser beam used. In practice, the distance $S_2$ is finely adjusted such that the reflected beam is made parallel to the P-axis and then determined.

An incident laser beam is focused at a point (beam converging point $Q_2$ or $Q_2'$) inside the spherical body 104 in this embodiment, whereas an incident laser beam is focused at a point ($Q_1$ or $Q_1$a) on the surface of the spherical body 4 in the first embodiment. Therefore, less attention needs to be paid to partial scratches on the surface of the spherical body 104 than the spherical body 4 in the first embodiment.

In the first embodiment, the shape deviation of the sphericity of the spherical body 4 needs to be evaluated at many points on the surface to confirm that the deviation is within the tolerance. In the present embodiment, however, since the laser beam 8b converged at the center of the spherical body 104 expands to a given area as the laser beam 8c and is reflected by the coating 12, the average shape deviation of the sphericity can be used for evaluation. More specifically, the shape deviations of the sphericity are averaged in a given area on the spherical body surface, and the average is evaluated. Therefore, a high machining precision is not required, unlike the case of the spherical body 4 in the first embodiment, and the spherical body 104 can be made at low cost.

Third embodiment

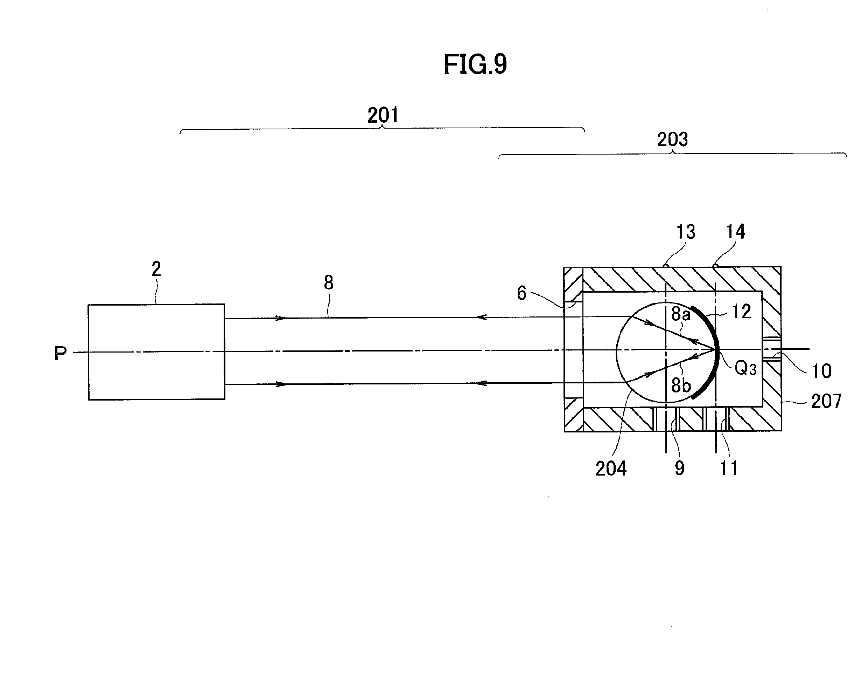

Fig. 9 is a cross-sectional view of a laser reflector according to a third embodiment of the present invention. A laser-interferometer length measuring machine 201 has almost the same structure as the length measuring machine 1, but the laser reflector has a different structure from that in the first embodiment. Components having similar functions to but different structures from those described above are assigned reference numbers to which 200 are added.

The laser reflector 203 includes a spherical body 204 having a refractive index n3, and a casing 207 that accommodates the spherical body 204. The casing 207 has a circular window 6 in the same way as in the first embodiment. The spherical body 204 has a coating 12 which covers a part of its surface in the same way as in the first embodiment.

The spherical body 204 is made of a special material having the refractive index n3, which is about 2. Therefore, a laser beam 8 incident on the spherical body 204 is focused at a point $Q_3$ on a side of the spherical surface opposite the incident side due to the refractive index. The point $Q_3$ is the intersection of the optical axis (P-axis) of the laser beam and the spherical surface at the side opposite the incident side. A laser beam 8a is reflected from the coating 12, passes through the inside of the spherical body 204 as a laser beam 8b, and is returned to an interferometer 2 as a laser beam parallel to the P-axis when emerging from the spherical body 204.

Even if the position of the point $Q_3$ is shifted slightly due to a change in the orientation of a movable stage 17, as long as the spherical body 204 has a refractive index n3 of about 2, the reflected laser beam is returned to the interferometer 2 as a laser beam parallel to the incident laser beam. The laser reflector 203 serves as a spherical cat's eye.

According to the present embodiment, since the lens 5 or 105, used in the first or second embodiment, is not necessary, the number of components constituting the laser reflector 203 is reduced. In addition, fine adjustment of the distance between the spherical body 4 and the lens 5, or between the spherical lens 104 and the lens 105 is not required, and therefore, the laser reflector 203 is assembled more easily. Furthermore, because the length of the casing 207 can be made shorter than in the first or second embodiment, the laser reflector 203 is made more compact.

In the above embodiments, the descriptions have been made for a case where the laser reflector is pitched around the Y axis by the tilt angle $\Delta\theta_Y$. The same advantages can be obtained for a case where the laser reflector is rolled around the Z axis by a tilt angle $\Delta\theta_Z$ and for a case where the laser reflector is yawed around the X axis by a tilt angle $\Delta\theta_X$.

In the above embodiments, the laser reflector is used for the laser-interferometer length measuring machine. The application of the laser reflector is not limited to this case, however. The laser reflector can also be used effectively for cases where a workpiece or a tool is positioned by the use of a laser beam in precision measuring apparatuses and precision machining apparatuses.

Examples

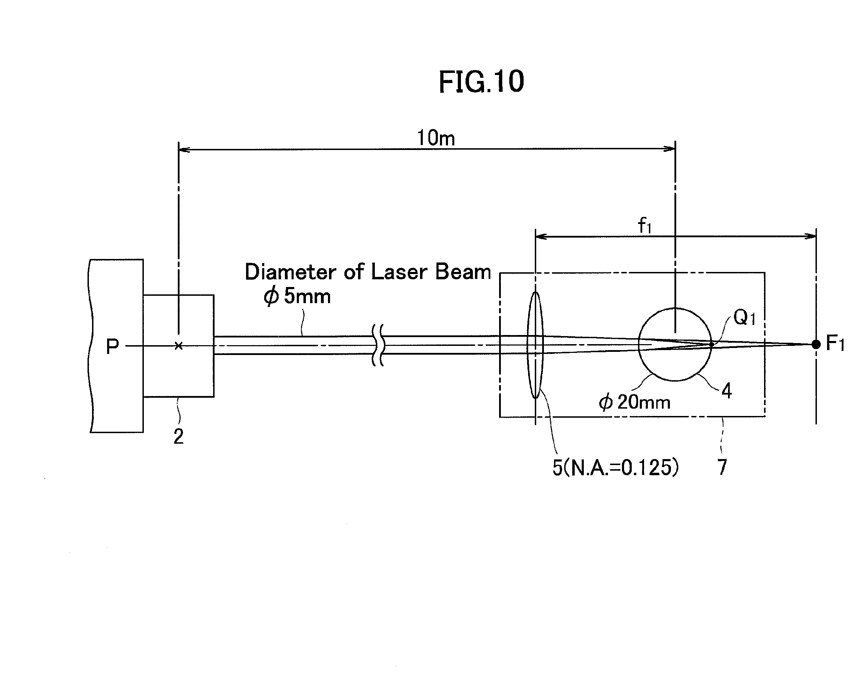

A one-dimensional laser-interferometer length measuring system was used to measure the movement distance of a table of a three-dimensional measuring machine or a machine tool. A laser reflector of the present invention was used in the system, as shown in Fig. 10.

Specifications of the laser reflector and other components were as follows:

Diameter of spherical body 4: 20 mm
Diameter of laser beam: 5 mm
Wavelength of laser beam: 0.633 $\mu$m
Numerical aperture (N.A.) of lens 5: n x sin$\theta$ = 0.125, where n indicates the refractive index of air, which is 1.

If the orientation of the table of the three-dimensional measuring machine or the machine tool changes due to pitching or yawing, the tilt angle $\Delta\theta_Y$ is usually 10 arc seconds or less. When the table was moved against the interferometer 2 by up to 10 m (in usual cases, up to 5 m), the positional shift of the spherical body 4 from the optical axis (P-axis) for a tilt angle of 10 arc seconds (1/360 degrees) was 0.5 mm, and the beam converging point $Q_1$a was shifted along the P-axis by 12.5 $\mu$m. The depth of focus d corresponding to the numerical aperture (N.A.) was found from the following Expression (1) to be about 40 $\mu$m, which is larger than the shift distance of the point $Q_1$a. Therefore, even when the length measuring region is 10 m long, the beam converging point $Q_1$a, used when the table is tilted, can be considered as a point on the spherical surface. In Fig. 10, the coating 12, which covers a part of the spherical surface, is omitted.

$$d = \lambda \left[ n^2 - (N.A.)^2 \right]^{1/2} \big/ (N.A.)^2 \qquad \cdots (1)$$

As a comparative example, a case will be described for reflected beam intensity, in which a flat mirror or a comer-cube prism was used as a reference beam reflector in a general Michelson interferometer employed in a laser-interferometer length measuring machine. The Lissajous figure of an interference fringe signal caused by the flat mirror was drawn and its diameter was measured as 100%. Then, the flat mirror was replaced with a comer-cube prism having a circular plane of incidence, a diameter of 12.7 mm and three orthogonal edges chamfered for safety at a width of 0.2 mm, the Lissajous figure was drawn, and its diameter was measured. The three orthogonal surfaces were all coated with silver. The diameter of the Lissajous figure was reduced to 65% to 70% of that measured before replacement.

The intensity I of interference fringes is expressed by the following Expression (2), where a indicates the amplitude of a measuring beam, and b indicates the amplitude of a reference beam.

$$I = a^2 + b^2 + 2ab \cdot \cos \omega t \qquad \cdots (2)$$

As shown in the above Expression, the intensity I of interference fringes changes as time t passes with a magnitude of 4ab, which is the amplitude of the Lissajous figure. In the comparative example, $4ab_2/4ab_1 = (65\%$ to $70\%)$ /100%, where $b_1$ indicates the amplitude of a reference beam when the flat mirror was used, and $b_2$ indicates the amplitude of a reference beam when the comer-cube prism was used. Therefore, the ratio between the reference beam intensities is shown by the following Expression (3).

$$(b_2 / b_1)^2 = 0.42 \sim 0.49 \qquad \cdots (3)$$

This means that the reference beam intensity is reduced to less than half with the use of the comer-cube prism.

An estimate of an advantage of a laser reflector of the present invention will be described next. When the comer-cube prism of the comparative example was replaced with a laser reflector of the present invention, it could be estimated that the amplitude (4ab) of the Lissajous figure was about half of that obtained when the comer-cube prism was used. In other words, $4ab_2/4ab_1 = (80\%$ to $85\%)/100\%$, where $b_1$ indicates the amplitude of a reference beam when the flat mirror was used, and $b_2$ indicates the amplitude of a reference beam when the laser reflector of the present invention was used. This was because, unlike when the comer-cube prism was used, a laser beam was not shaded by the three edges or not divided into six portions when the laser reflector of the present invention was used, although attenuation occurred due to reflection at the surface of the objective lens and the surface of the spherical body and absorption at the inside of the spherical body. Therefore, the ratio between the reference beam intensities is shown by the following Expression (4).

$$(b_2 / b_1)^2 = 0.64 \sim 0.72 \qquad \cdots (4)$$

It was expected that the reflected beam intensity was attenuated just by 28% to 36% when the laser reflector of the present invention was used. The laser reflector of the present invention reduced the attenuation to less than 40%, whereas the comer-cube prism had an intensity attenuation of 51% to 58%, which was more than 50%.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A laser reflector (3) for converging a laser beam emitted from an irradiation unit (2) at a point by a lens (5) and a spherical body (4) and for reflecting the laser beam by a coating (12) on a surface of the spherical body (4) to be returned, parallel to an optical axis (P-axis) of the laser beam emitted from the irradiation unit (2), to the irradiation unit (2), the laser reflector (3) comprising:

   the lens (5) and the spherical body (4), provided on the optical axis (P-axis) of the laser beam emitted from the irradiation unit (2);
   the coating (12) that covers the surface of the spherical body (4) and reflects the laser beam; and
   a supporting member (7) that keeps the positional relationship between the lens (5) and the spherical body (4);
   wherein the center and the two focuses of the lens (5) are disposed on the optical axis (P-axis),
   wherein the center of the spherical body (4) is disposed such that the center of the spherical body (4) is on a line connecting the center of the lens (5) and a focus ($F_1$) of the two focuses of the lens (5) farther from the irradiation unit (2) and such that the focus ($F_1$) of the lens (5) is outside the spherical body (4),
   wherein the coating (12) covers at least an area that includes the intersection ($Q_1$) of the optical axis (P-axis) and a half spherical surface of the spherical body (4) closer to the focus ($F_1$) of the lens (5), on the half spherical surface,
   wherein the distance ($S_1$) between the center of the lens (5) and the center of the spherical body (4) and the refractive index (n1) of the spherical body (4) are specified such that the laser beam converged by the lens (5) toward the focus ($F_1$) is refracted by the spherical body (4), passes through the inside of the spherical body (4), and is converged at the intersection ($Q_1$) covered by the coating (12),
   wherein the laser beam converged at the intersection ($Q_1$) is reflected by the coating (12) to be returned to the irradiation unit (2) as a reflected beam parallel to the optical axis (P-axis), and
   wherein, in the state that the orientation of the supporting member (7) is changed, causing a line connecting the centers of the lens (5) and the spherical body (4) to be tilted relative to the optical axis (P-axis), an incident laser beam is converged by the lens (5) and the spherical body (4) at a point ($Q_1a$) on the surface of the spherical body (4) shifted from the intersection ($Q_1$), and is reflected by the coating (12) to be returned to the irradiation unit (2) as a reflected beam parallel to the optical axis (P-axis).

2. A laser reflector (103) for converging a laser beam emitted from an irradiation unit (2) at a point inside the spherical body by a lens (105) and for reflecting the laser beam by a coating (12) on a surface of the spherical body (104) to be returned, parallel to an optical axis (P-axis) of the laser beam emitted from the irradiation unit (2), to the irradiation unit (2), the laser reflector (103) comprising:

   the lens (105) and a spherical body (104) provided on the optical axis (P-axis) of the laser beam emitted from the irradiation unit (2);
   the coating (12) that covers the surface of the spherical body (104) and reflects the laser beam; and
   a supporting member (107) that keeps the positional relationship between the lens (105) and the spherical body (104);
   wherein the center and the two focuses of the lens (105) are disposed on the optical axis (P-axis),
   wherein the center of the spherical body (104) matches a focus ($F_2$) of the two focuses of the lens (105) farther from the irradiation unit (2),
   wherein the coating (12) covers at least an area around the intersection ($A_2$) of the optical axis (P-axis) and a half spherical surface of the spherical body (104) away from the lens (105), the area having almost the same area as an area where the laser beam emitted from the irradiation unit (2) irradiates the spherical body (104), on the half spherical surface,
   wherein the laser beam converged at the focus ($F_2$) inside the spherical body (104) by the lens (105) is reflected by the coating (12) in the state that the laser beam expands to a given area from the focus ($F_2$), to be returned to the irradiation unit (2) as a reflected beam parallel to the optical axis (P-axis), and
   wherein, in the state that the orientation of the supporting member (107) is changed, causing a line connecting the centers of the lens (105) and the spherical body (104) to be tilted relative to the optical axis (P-axis), an incident laser beam is converged by the lens (105) and the spherical body (104) at a point ($Q_2'$) on a focal plane shifted from the focus ($F_2$), and is reflected by the coating (12) in the state that the laser beam expands to a given area, to be returned to the irradiation unit (2) as a reflected beam parallel to the optical axis (P-axis).

3. A laser reflector (203) for converging a laser beam emitted from an irradiation unit (2) at a point by a spherical body (204) and for reflecting the laser beam by a coating (12) on a surface of the spherical body (204) to be returned, parallel to an optical axis (P-axis) of the laser beam emitted from the irradiation unit (2), to the irradiation unit (2), the laser reflector (203) comprising:

the spherical body (204) provided on the optical axis (P-axis) of the laser beam emitted from the irradiation unit (2);
the coating (12) that covers the surface of the spherical body (204) and reflects the laser beam; and
a supporting member (207) that holds the spherical body (204);
wherein the center of the spherical body (204) is disposed on the optical axis (P-axis),
wherein the coating (12) covers at least an area that includes the intersection ($Q_3$) of the optical axis (P-axis) and a half spherical surface of the spherical body (204) away from the irradiation unit (2), on the half spherical surface,
wherein the refractive index (n3) of the spherical body (204) is set to 2, and
wherein a laser beam incident on the spherical body (204) is refracted due to the refractive index n3 of 2, to be converged at the intersection ($Q_3$) covered by the coating (12) after advancing inside the spherical body (204), and is reflected by the coating (12) to be returned to the irradiation unit (2) as a reflected beam parallel to the optical axis (P-axis).

4. The laser reflector (3,103,203) according to at least one of claims 1 to 3, wherein the supporting member (7,107,207) have a circular window (6) that restricts the diameter of the laser beam emitted from the irradiation unit (2).

5. The laser reflector (3,103,203) according to at least one of claims 1 to 4, wherein the supporting member (7,107,207) is configured such that the supporting member (7,107,207) can be mounted on a movable stage that can move in a direction almost parallel to the optical axis (P-axis);
wherein the supporting member (7,107,207) has mounting holes (9,10,11) at positions corresponding to the center of the spherical body (4,104,204), the point where the laser beam is converged, and the position of the coating (12); and
wherein the supporting member (7,107,207) has indicators (13,14) for indicating the center of the spherical body (4,104,204), the point where the laser beam is converged, and the position of the coating (12).

6. The laser reflector (3,103,203) according to at least one of claims 1 to 5, wherein the coating (12) includes a silver reflective film and a protective film that covers the silver reflective film.

# FIG.1

15 Laser

2 Interferometer
Measuring
Beam

3 Laser Reflector

X axis

W Object Under Measurment

17 Movable Stage

$\theta$X

$\theta$Y

Z axis

Y axis

$\theta$Z

19 Base

18 Driving Mechanism

EP 2 369 372 A2

FIG.2

EP 2 369 372 A2

# FIG.3

EP 2 369 372 A2

FIG.4

FIG.5

FIG.6

EP 2 369 372 A2

# FIG.7A

105    Q2(F2)    12

2

Laser Reflector is not tilted

104

# FIG.7B

105    Q2'(F2')    12

2     $\Delta\theta$ Y

104

Laser Reflector is tilted by a tilt angle $\Delta\theta$ Y

FIG.8

FIG.9

# FIG.10

10m

f₁

Diameter of Laser Beam
φ 5mm

P

2

5(N.A.=0.125)

φ 20mm

Q₁

4

7

F₁

# FIG.11

2 Interferometer

22 Fixed Mirror — Reference Beam

21
Beam Splitter

Measuring Beam
16 Movable Mirror
(Corner-cube Prism)

15 Laser

23 Detector

# FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010057455 A

- JP HEI2115701 B